# EUROPÄISCHE PATENTSCHRIFT

(11) **EP 0 875 407 B1**
(45) Veröffentlichungstag und Bekanntmachung des Hinweises auf die Patenterteilung: **11.06.2003**
(21) Anmeldenummer: 98103768.2
(22) Anmeldetag: 04.03.1998
(51) Int. Cl.: B60J 3/02

(54) **Lagerböckchen für eine Fahrzeug-Sonnenblende**
Bearing support for vehicle sun visor
Support de palier d'un pare-soleil pour véhicules

(30) Priorität: 02.05.1997 DE 19718506
(43) Veröffentlichungstag der Anmeldung: 04.11.1998
(73) Patentinhaber: Johnson Controls Interiors GmbH & Co. KG, 42285 Wuppertal (DE)
(72) Erfinder: Jacquemin, Didier, 70300 Luxeuil Les Bains (FR); Delus, Christian, 57070 St. Julien Les Metz (FR)
(74) Vertreter: Hemmelmann, Klaus

(56) Entgegenhaltungen:
- DE-A- 4 326 660
- DE-A- 4 341 093
- US-A- 5 314 227
- US-A- 5 390 973

## Beschreibung

Die Erfindung betrifft ein Lagerböckchen der im Oberbegriff des Anspruchs 1 angegeben Art.

Bei einem aus DE-A-43 26 660 bekannten Lagerböckchen dieser Art hintergreift jedes nur einschenkelig ausgebildete Verriegelungselement einen Ausschnittsrand der Tragstruktur, um das Lagerböckchen an der Tragstruktur festzulegen. Zur zusätzlichen Sicherung wird in den Ausschnitt der Tragstruktur angrenzend an das Verriegelungselement ein Sperrkeil eingetrieben, der sich am Verriegelungselement verrastet, dieses gegen den von ihm übergriffenen Ausschnittrand preßt, und seinerseits stumpf am anderen Ausschnittsrand anliegt, so daß das Verriegelungselement unter einer Zugbelastung entgegengesetzt zur Einsteckrichtung nicht vom von ihm übergriffenen Ausschnittsrand abgleiten kann. Mit dem Lagerböckchen läßt sich gleichzeitig ein weiterer Ausstattungsteil (Fahrzeughimmel oder Verkleidung) an der Tragstruktur (Karosserieblech mit Ausschnitten für die beiden Verriegelungselemente und den Lagerdom) haltbar festlegen. Da bei einem Lagerböckchen für eine Sonnenblende in Abhängigkeit vom Bewegungswiderstand der Sonnenblendenachse oder der Sonnenblende an der Achse bei der Benutzung erhebliche Kräfte auf das Lagerböckchen wirken können, ist es nachteilig, daß die beiden Verriegelungselemente nur einseitig tragen, somit lokal hoch belastet werden, und gegebenenfalls ein einseitiges Abheben des Grundkörpers von der Tragstruktur bzw. dem Ausstattungsteil zulassen. Ferner ist es unzweckmäßig, daß die Demontage unter Umständen schwierig ist, weil die Verrastung der Sperrkeile an den Verriegelungselementen kaum ohne Zerstörung lösbar ist.

Desweiteren ist aus der US 5 314 227 A ein Anbringungssystem fürreine Sonnenblende bekannt, bei dem ein Einschnapp-Sonnenblendengehäuse ein Anbringungselement aus polymerem Material umfaßt, daß wenigstens ein elastisches, beabstandetes Bein zum Angreifen der oberen Fläche des Beschichtungsmetalles des Fahrzeugdaches aufweist. Das Anbringungselement wird dabei von einem Einschnapp-Ringelement durchfaßt, und zwar zum einen, um das Bein des Anbringungselementes in eine verriegelte Position zu zwingen und zum anderen, um das Ringelement mit dem Anbringungselement zu verriegeln.

Das Anbringungssystem für die Sonnenblende umfaßt dabei eine Sonnenblendenachse mit einer L- förmigen Bauform mit einem integralen Anbringungselement und einer an einem Ende befindlichen Torsionssicherung. Das Anbringungselement umfaßt ein Paar von gegenüberliegenden nach außen und nach unten gerichteten beabstandete Beine, die eine im wesentlichen horizontal verlaufende Abschlußkante aufweisen, die einwärts gesehen von dem Ende der Beine beabstandet ist, um in die obere Fläche des Fahrzeugdaches einzugreifen. Die Beine umfassen weiterhin z.B. als in diesen eingeformte Nuten ausgebildete Mittel zum verriegelnden Aufnehmen von aufwärts verlaufenden Nasen der Ringplatte, die das abgewinkelte Ende der Sonnenblendenachse umgibt. Die Ringplatte umfaßt dabei zwei beabstandete Nasen, die zwischen dem Körper des Anbringungselementes und den außen verlaufenden Beinen verlaufen und darin ausgerichtet sind, um die Beine in eine expandierte Position festzuklemmen, um das Anbringungselement an dem Fahrzeugdach zu verriegeln.

Mit dieser Anordnung soll es möglich sein, auf relativ einfache Weise eine Installation und permanente Anbringung einer Sonnenblende an einem Fahrzeugdach vorzunehmen, und zwar unter Verwendung relativ weniger Teile, die integral aus einem polymeren Material angeformt sein können, um die Herstellungskosten und die Komplexität des Sonnenblendenandringungssystems zu reduzieren, und um außerdem die Installation zu erleichtern. Es wird dabei durch die Ringplatte nicht nur eine begradigte Erscheinung der Sonnenblendeninstallation erreicht, wenn diese in ihre Position eingeschnappt ist, sondern die Ringplatte verriegelt außerdem mit dem Anbringungselement, um die elastischen Beine in eine permanente verriegelte Position gegenüber einer rechteckigen Öffnung in dem Fahrzeugdach festzuklemmen. Auf diese Weise werden einerseits die Ringplatte und das eine Torsionssicherung bildende Anbringungselement miteinander eingeschnappt, andererseits wird das die Torsionssicherung bildende Anbringungselement in dem Fahrzeugdach eingeschnappt.

Gewünschtenfalls kann dabei die Ringplatte Öffnungen zum Einsetzen eines kleinen Werkzeuges umfassen, um die Beine zum Entfernen der Ringplatte nach innen zu biegen, so daß anschließend das Anbringungselement zur Wartung der Sonnenblende entfernt werden kann.

Nachteilig bei diesem bekannten Anbringungssystem für eine Sonnenblende ist insb. die konstruktiv aufwendige Ausbildung der die Anordnung bildenden Einzelelemente sowie auch der Anordnung insgesamt, weiterhin nachteilig sind außerdem die eingeschränkten Funktionseigenschaften dieser Anordnung z.B. hinsichtlich der Anbringung zusätzlicher Ausstattungsteile, wie eines Dachhimmels oder einer Verkleidung. Wünschenswert wäre auch hier eine weitere Vereinfachung der Montage und Demontage der Sonnenblendenanordnung.

Die gestellte Aufgabe wird erfindungsgemäß mit den Merkmalen des Anspruchs 1 gelöst.

Jedes Verriegelungselement kommt mit beiden Schenkeln zum Tragen, sobald das Lagerböckchen fertig montiert ist. Auch hohe Belastungen entgegensetzt zur Einsteckrichtung werden großflächig und dauerhaft aufgenommen, wobei ein einseitiges Abheben des Lagerböckchens bzw. des Grundkörpers kaum mehr möglich ist. Die für das bequeme Einstecken und Verriegeln jedes Verriegelungselementes erforderlich Beweglichkeit zumindest des zweiten Schenkels des Verriegelungselements und dessen bauliche Trennung vom Grundkörper sind für die Belastbarkeit des fertig montierten Lagerböckchens ohne Nachteil, da der Grundkörper durch die Kupplung zugkraftübertragend und ggfs. spielfrei mit dem beweglichen Schenkelgekuppelt wird. Dadurch wird der Grundkörper in diesem Bereich fest am ohnedies an der Fahrzeugstruktur abgestützten, beweglichen Schenkel verankert.

Gemäß Anspruch 2 wird besonders bequem die Kupplung mittels des Sperrkeils betätigt, der das Verriegelungselement an der Tragstruktur sichert. Da der Sperrkeil nicht unter Anlage an einem Ausschnittsrand in seine Verrastung gezwungen wird, sondern sich auf andere, leichter lösbare Weise am Grundkörper verrasten läßt, ist das Lagerböckchen problemlos jederzeit wieder demontierbar.

Gemäß Anspruch 3 wird die Demontage dadurch vereinfacht, daß der bewegliche Schenkel nach Entfernen des Sperrkeils selbsttätig die Kupplung wieder löst. Die Vorspannung des beweglichen Schenkels im Lösesinn der Kupplung hat ferner den Vorteil, daß der Sperrkeil mit Nachdruck einzutreiben und dadurch spürbar ist, ob das Lagerböckchen ordnungsgemäß gesichert wird.

Gemäß Anspruch 4 ist die Kupplung formentechnisch einfach aus wirkungsvoll kooperierenden Elementen gebildet, wobei es im Hinblick auf eine sichere Festlegung günstig ist, daß Lösen und Einrücken der Kupplung in Eingriffsrichtung des beweglichen Schenkels, die Kraftübertragung durch die Kupplung hingegen entgegengesetzt zur Einsteckrichtung stattfinden.

Gemäß Anspruch 5 ist die Kupplung baulich einfach und bequem betätigbar ausgebildet.

Gemäß Anspruch 6 wird durch die Anzugsschräge die Möglichkeit geschaffen, den Grundkörper durch die Wirkung des Sperrkeils auf den beweglichen Schenkel in Richtung zur Tragstruktur anzuziehen oder sogar gegen diese vorzuspannen, wodurch ein sehr fester und spielfreier Sitz des Lagerböckchens erzielbar ist.

Gemäß Anspruch 7 ist der bewegliche Schenkel formentechnisch so ausgebildet, daß er das Einstecken in den Ausschnitt der Tragstruktur mit vertretbarem Kraftaufwand und ohne Schaden durchführen läßt.

Gemäß Anspruch 8 ist sichergestellt, daß der bewegliche Schenkel leicht in die Halteposition gelangt und den Ausschnittsrand hintergreift. Ferner ist durch den Anstieg der Verriegelungsschulter eine gewisse Kompensation von Fertigungstoleranzen im Lagerböckchen bzw. an der Tragstruktur (Grat) gegeben.

Gemäß Anspruch 9 ergibt sich eine bequeme Handhabung bei der Montage und Demontage. Die getrennte Ausbildung kann ferner formentechnische Vorteile bieten.

Alternativ ist gemäß Anspruch 10 die Abdeckung baulich einstückig in das Lagerböckchen integriert. Die Handhabung bei der Montage wird dadurch noch bequemer, weil alle notwendigen Komponenten gleich zur Hand sind.

Gemäß Anspruch 11 wird eine großflächige Anlage des Lagerböckchens an der Tragstruktur erreicht, wobei mittels der Flansche, falls erforderlich, mit dem Lagerböckchen auch ein weiterer Ausstattungsteil an der Tragstruktur befestigt werden kann.

Gemäß Anspruch 12 wird der weitere Ausstattungsteil allseitig an die Tragstruktur angepreßt. Es entsteht ein gefälliges und dekoratives Ansichtsbild des fertig montierten Lagerböckchens.

Gemäß Anspruch 13 ist das Lagerböckchen mit oder ohne Abdeckung ein einstückiger Formteil, der in Großserienproduktion kostengünstig, formstabil und maßgenau herstellbar ist.

Gemäß Anspruch 14 ist auch die Abdeckung ein einstückiger Formteil, der zur Massenproduktion geeignet ist.

Gemäß Anspruch 15 ist im Lagerdom vorgreifend zur Montage des Lagerböckchens bereits die Sonnenblenden-Achse festglegt.

Anhand der Zeichnung werden Ausführungsformen des Erfindungsgegenstandes erläutert. Es zeigen:
- Fig. 1: eine Seitenansicht, teilweise im Schnitt, einer ersten Ausführungsform eines Lagerböckchens,
- Fig. 2: eine Perspektivansicht zu Fig. 1, und
- Fig. 3: eine Seitenansicht einer weiteren Ausführungsform eines Lagerböckchens vor der Montage.

Ein Lagerböckchen B zum Festlegen einer Achse X beispielsweise einer Sonnenblende (nicht gezeigt) und gegebenenfalls eines weiteren Ausstattungsteils H, z.B. eines Dachhimmels oder einer Verkleidungsplatte, an einer Fahrzeugtragstruktur K, typischerweise dem Karosserieblech eines Kraftfahrzeugs, besteht aus zwei einstückigen Kunsttoff-Spritzguß-Formteilen. Zum Montieren des Lagerböckchens B benötigt die Tragstruktur T ein Lochbild mit beispielsweise zwei viereckigen Ausschnitten und einem dazwischenliegenden runden Ausschnitt (nicht im Detail hervorgehoben).

An einem rahmenförmigen Grundkörper 1 sind an einer der Sichtseite abgewandten Rückseite ein Lagerdom 3 und von diesem beabstandet und diametral zwei Verriegelungselemente V angeordnet, die zumindest weitgehend gleich ausgebildet sind. Jedes Verriegelungselement V besteht aus einem mit dem Grundkörper 1 starr verbundenen Schenkel 10, der sich in etwa senkrecht zur Hauptebene des Grundkörpers 1 erstreckt, und einem in einem verformbaren Verbindungsbereich 16 mit dem Schenkel 10 verbundenen, schräg abfallenden Schenkel 11, der einen frei auslaufenden Endabschnitt 17 besitzt. Die beiden Verriegelungselemente V sind gleichsinnig am Grundkörper 1 angebracht, so daß ein Schenkel 11 und ein Schenkel 10 dem Lagerdom 3 zugewandt sind. Jeder Schenkel 10, 11 besitzt wenigstens eine Stützschulter 13, 14, mit der einer von zwei sich gegenüberliegenden Ausschnittsrändern der Tragstruktur K hintergreifbar ist. Annähernd mit der Wandstärke der Tragstruktur K ist den Stützschultern 13, 14 eine im wesentlichen ebene Anlagefläche 12 des Grundkörpers 1 zugewandt, mit der der Grundkörper 1 gegen die Unterseite der Tragstruktur K andrückbar ist. An jedem zum Grundkörper 1 hin gegenüber dem Schenkel 10 divergierenden Schenkel 11 ist außenseitig eine schräge Einführrampe 15 angeformt. Die Innenseiten beider Schenkel 10, 11 definieren einen zwickelförmigen Freiraum, zu dem von der Sichtseite des Grundkörpers 1 offene Einführöffnungen 21 führen. Der freie Endabschnitt 17 jedes Schenkels 11 führt zurück bis in die Einführöffnung 21. Zwischen dem freien Endabschnitt 17 jedes Schenkels 11 und dem Grundkörper 1 ist eine wahlweise einrückbare bzw. lösbare, formschlüssige Kupplung K vorgesehen, die bei der gezeigten Ausführungsform aus einem am freien Endabschnitt 17 vorstehend ausgebildeten Eingriffselement 18 (einem Haken) und einem im Grundkörper 1 ausgebildeten Gegeneingriffselement 19 (einer zur Sichtseite offenen Tasche mit einer Stützschulter) ausgebildet ist. Das Eingriffselement 18 und/oder das Gegeneingriffselement 19 können mit einer Anzugsschräge (beispielsweise 22 beim Gegeneingriffselement 19) ausgebildet sein, mittels der zum Einrücken der Kupplung K in Eingriffsrichtung E des Schenkels 11 mit dem zugeordneten Ausschnittsrand der Tragstruktur K der Grundkörper 1 mit seiner Auflagefläche 12 gegen die Tragstruktur K. anpreßbar sein kann. Die Stützschultern 14 an den Schenkeln 11 sind zweckmäßigerweise so geformt, daß sie in Eingriffsrichtung schräg ansteigen. Die vom Eingriffselement 18 der Kupplung K hintergreifbare Stützschulter ist mit 20 angedeutet.

Zum Lagerböckchen B gehört eine plattenförmige Abdeckung 2, an der auf die zwickelförmigen Freiräume zwischen den Schenkeln 10, 11 der Verriegelungselemente V ausgerichtete Sperrkeile 8 sowie im Grundkörper 1 verrastbare Verrastelemente 9 angeformt sind. Die Abdeckung 2 ist mit einem Durchgang 7 auf die Achse X auffädelbar. Der Grundkörper 1 ist mit den Verriegelungselementen V und dem Lagerdom 3 in Einsteckrichtung S in die Ausschnitte der Tragstruktur K einsteckbar und darin verriegelbar. Die Abdeckung 2 ist ebenfalls in Einsteckrichtung S mit den Sperrkeilen 8 und den Verrastelementen 9 in den Grundkörper 1 einführbar. Gegebenenfalls am Grundkörper 1 vorgesehene Flansche 5 und ein an der Sichtseite des Grundkörpers 1 angeformter, eine Öffnung 7' für die Achse X aufweisender Flanschteil 4 sind gegebenenfallfs verwendbar zum Andrücken des weiteren Ausstattungsteils H an die Tragstruktur T nach der Endmontage des Lagerböckchens B.

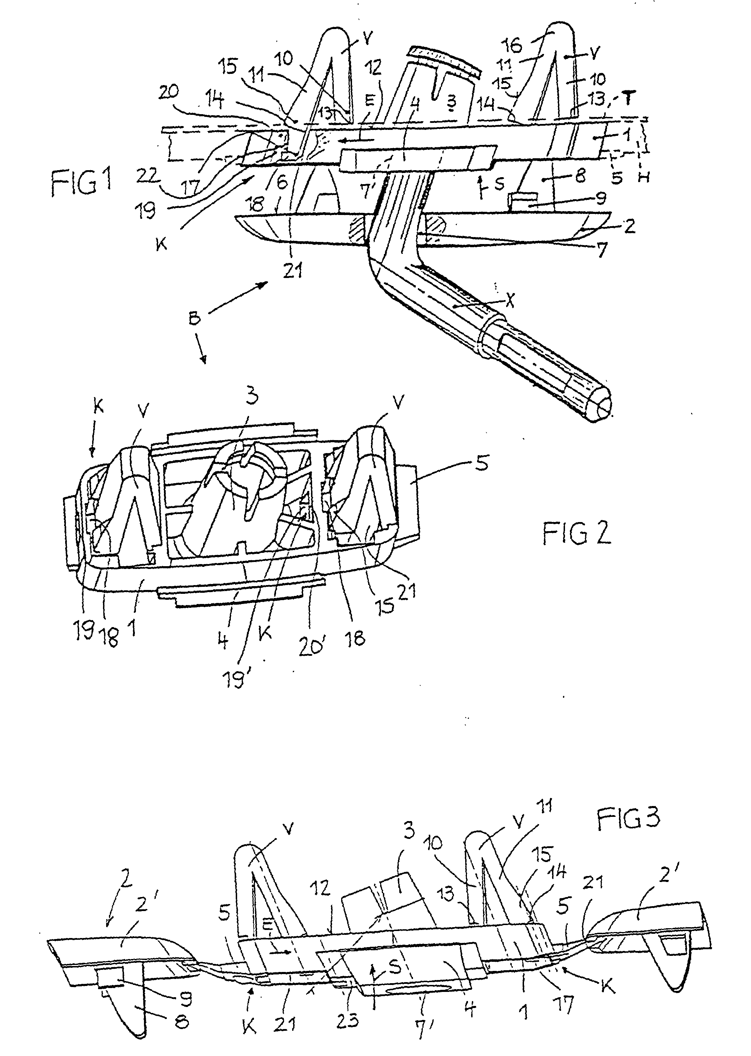

Einige der zu Fig. 1 erläuterten Komponenten sind in der Perspektivdraufsicht auf die Rückseite des Grundkörpers 1 in Fig. 2 erkennbar. Insbesondere zeigt Fig. 2, daß die Kupplungen K ähnlich, jedoch nicht identisch ausgebildet sind, weil die Stützschulter 20' und das Gegeneingriffselement 19' auf der rechten Seite des Lagerdoms in Fig. 2 von geringfügig anderer Form sind als die entsprechenden Teile bei der Kupplung K links vom Lagerdom 3.

Vor der Montage wird der Grundkörper 1 in einen passenden Ausschnitt des Ausstattungsteils H eingesetzt, wobei er entweder durch einen entsprechenden Sitz oder durch nicht dargestellte Hilfseinrichtungen in dem Ausstattungsteil H in der in Fig. 1 angedeuteten Lage vorfixierbar ist. Dann wird der Ausstattungsteil H zusammen mit dem gegebenenfalls vorfixierten Grundkörper 1 in Einsteckrichtung S in die Ausschnitte der Tragstruktur K eingeschoben, bis die beiden gegenüberliegenden Ausschnittsränder jedes Ausschnittes hinter die beiden Stützschultern 14, 13 der Schenkel 10, 11 eingreifen. Die Schenkel 11 werden bis zum Eingreifen der Stützschultern 14 und mittels der Einführschrägen 15 federnd in Richtung zu den Schenkeln 10 (entgegen der Eingriffsrichtung E) verformt und springen schließlich mit ihren Stützschultern 14 über die Ausschnittsränder. Die Auflagefläche 12 liegt an der Tragstruktur T an. In weiterer Folge wird die Abdeckung 2 entlang der Achse X zum Grundkörper 1 hin verschoben und werden die beiden Sperrkeile 8 in die Freiräume zwischen den Schenkeln 10, 11 eingeführt. Durch die Keilschräge jedes Sperrkeiles 8 wird der zugeordnete Schenkel 11 relativ zum anderen Schenkel 10 aufgespreizt und werden die Stützschultern 13, 14 an den Ausschnittsrändern gesichert. Gleichzeitig wird bei dieser in Eingriffsrichtung E erfolgenden Bewegung jedes freien Endabschnittes 17 die Kupplung K eingerückt, indem der Eingriffsteil 18 in den Gegeneingriffsteil 19 (oder 19') hineingreift. Die eingerückte Kupplung K stellt dann entgegengesetzt zur Einsteckrichtung S eine zugfeste Verbindung zwischen dem Grundkörper 1 und dem Schenkel 11 her, so daß eine entgegengesetzt zur Einsteckrichtung S am Grundkörper 1 angreifende Last über die eingerückte Kupplung K und den Endabschnitt 17 auf die Abstützschulter 14 und von dieser direkt in die Tragstruktur T übertragen wird. Die Abdeckung 2 deckt die Sichtseite des Grundkörpers 1 ab, ist an diesem verrastet und hält den weiteren Ausstattungsteil H an der Tragstruktur T fest. Die Achse X ist zuvor bereits im Grundkörper 1 bzw. in dessen Lagerdom 3 montiert.

Das Lagerböckchen B ist jederzeit wieder demontierbar. Es ist nur erforderlich, die Verrastung der Abdeckung 2 zu lösen und die Sperrkeile 8 herauszuziehen. Die Schenkel 11 federn dann entgegengesetzt zur Eingriffsrichtung E zurück und lösen die Kupplungen K, gegebenenfalls unterstützt durch Zuhilfenahme eines Werkzeugs. Da von der Sichtseite des Grundkörpers 1 freier Zugriff zu den Gegeneingriffselementen 19 bzw. 19' vorliegt, lassen sich die Schenkel 11 leicht aus dem Eingriff mit ihren Ausschnittsrändern lösen, ehe durch eine Verschiebung des Grundkörpers 1 in Fig. 1 nach links auch die Stützschultern 13 von ihren Ausschnittsrändern abgleiten und schließlich der Grundkörper 1 aus den Ausschnitten herausgezogen werden kann.

In Fig. 1 ist die Abdeckung 2 ein getrennter Kunststoff-Spritzguß-Formteil, der dem Grundkörper 1 zugeordnet ist. Es ist jedoch denkbar, die Abdeckung 2 von vornherein einstückig mit dem Grundkörper 1 auszubilden, etwa in der in Fig. 3 gezeigten Weise.

In Fig. 3 sind an den Flanschen 5 des Grundkörpers 1 Filmscharniere 21 vorgesehen, an denen die Hälften 2' der Abdeckung 2 einstückig und umklappbar angeschlossen sind. Die Abdeckungshälften 2' lassen sich aus der gezeigten Lage gegensinnig und relativ zum Grundkörper 1 verschwenken, bis die Sperrkeile 8 und die Rastelemente 9 in die Eingriffsöffnungen 21 des Grundkörpers eintauchen, um die Verriegelungselemente V an den Ausschnittsrändern zu verankern und die Kupplungen K einzurücken. Die Abdeckungshälften 2' überdecken die Sichtseite des Grundkörpers 1 nicht über die ganze Länge, sondern sparen zwischen sich den Flanschteil 4 mit der Einführöffnung 7' für die Achse X aus. Im verrasteten Zustand der Abdeckungshälften 2' liegen diese zweckmäßigerweise auf Widerlagern 23 am Flanschteil 4 des Grundkörpers 1 auf.

Die Anordnung der beiden Kupplungen K ist derart, daß eine Kupplung zum Lagerdom 3 weist, während die andere Kupplung an der dem Lagerdom 3 abgewandten Seite liegt. Dies erlaubt ein bequemes Handhaben des Grundkörpers 1 bei der Montage bzw. Demontage mit einer Verschiebung in den Fig. 1 und 3 nach links bzw. nach rechts, um die Abstützschultern 13, 14 korrekt in ihren Eingriff mit den Ausschnittsrändern zu bringen oder aus diesem Eingriff zu lösen. Die in Eingriffsrichtung E schräg ansteigenden Stützschultern 14 können unter der durch die Sperrkeile verursachten Eingriffsbewegung eine Anzugswirkung auf den Ausschnittsrändern erzeugen bzw. Herstellungstoleranzen des Lagerböckchens in diesem Bereich oder der Fahrzeug-Tragstruktur T kompensieren.

In den Fig. 1 und 3 verläuft die Eingriffsrichtung E in etwa in der Richtung, in der die Eingriffselemente V und der Lagerdom angeordnet sind. Es wäre denkbar, die Verriegelungselemente V gegenüber den gezeigten Lagen in den Fig. 1 und 3 um 90° verdreht am Grundkörper 1 anzuordnen, so daß die Eingriffsrichtung senkrecht zur Zeichenebene verläuft. Dabei könnte eine Anordnung gewählt werden, bei der die beiden Schenkel 11 zur selben Seite, oder alternativ in zueinander entgegengesetzte Richtungen weisen. Da die Abdeckung 2 ohnedies die Sichtseite des Grundkörpers 1 nach der Montage verdeckt und ausgehöhlt ausgebildet ist, könnte die Stützschulter 20 des Gegeneingriffselements 19 bzw. 19' auch direkt an der Sichtseite des Grundkörpers 1 angeordnet werden. Das Eingriffselement 18 würde dann zumindest geringfügig über die Sichtseite des Grundkörpers 1 vorstehen, sobald die Kupplung K eingerückt ist. Dadurch wäre ein bequemer Angriff an den freien Endabschnitten 17 der beiden Schenkel 11 zu Demontage des Lagerböckchens B möglich.

## Patentansprüche

1. Lagerböckchen (B) für eine Fahrzeug- Sonnenblende, insbesondere zur schraubenlosen Montage der Sonnenblenden-Achse (X) an einer Fahrzeug-Tragstruktur (T), mit einem mindestens zwei Verriegelungselemente (V) und wenigstens einen Lagerdom (3) tragenden Grundkörper (1), der mittels der in Ausschnitte einer Fahrzeug-Tragstruktur (T) einsteckbaren, Ausschnittsränder hintergreifenden Verriegelungselemente (V) montierbar ist, und mit einer sichtseitigen Abdeckung (2,2'), an der die Verriegelungselemente (V) sichernde, relativ zu den Verriegelungselementen bewegliche Sperrkeile (8) für die Verriegelungselemente angeordnet sind, wobei jedes Verriegelungselement (V) zwei Schenkel (10,11) aufweist und mit diesen an gegenüberliegenden Ausschnittsrändern quer zur Einsteckrichtung zum Eingriff bringbar ist, und wobei ein Schenkel (11) vom Grundkörper (1) getrennt und relativ zu diesem Grundkörper (1) in Eingriffsrichtung (E) beweglich angeordnet ist, **dadurch gekennzeichnet, daß** das Lagerböckchen (B) zwischen dem beweglichen Schenkel (11) und dem Grundkörper (1) eine formschlüssige, in Eingriffsrichtung (E) einrückbare, den Grundkörper (1) gegen eine zur Einsteckrichtung entgegengesetzte Bewegung sichernde, Kupplung (K) aufweist.

2. Lagerböckchen nach Anspruch 1, **dadurch gekennzeichnet, daß** der Sperrkeil (8) zwischen die beiden Schenkel (10, 11) eintreibbar ist, und daß die Kupplung (K) zwischen dem beweglichen Schenkel (11) und dem Grundkörper (1) mittelbar durch den Sperrkeil (8) im Einrücksinn betätigbar ist.

3. Lagerböckchen nach Anspruch 1, **dadurch gekennzeichnet, daß** der bewegliche Schenkel (11) federnd mit dem anderen Schenkel (10) verbun-den ist, und daß die Kupplung (K) zwischen dem beweglichen Schenkel (11) und dem Grundkörper (1) durch die Rückstellfederkraft des beweglichen Schenkels (11) im Lösesinn betätigbar ist.

4. Lagerböckchen nach wenigstens einem der Ansprüche 1 bis 3, **dadurch gekennzeichnet, daß** die Kupplung (K) aus in Eingriffsrichtung (E) relativ zueinander beweglichen, entgegen der Einstellrichtung (S) einander hintergreifenden Eingriffsund Gegeneingriffselementen (18, 19), jeweils am Schenkel (11) bzw. am Grundkörper (1), besteht, und daß die einander hintergreifenden Eingriffs- und Gegeneingriffselemente im wesentlichen ent-gegengesetzt zur Einsteckrichtung aneinander abstützbar sind.

5. Lagerböckchen nach Anspruch 4, **dadurch gekennzeichnet, daß** das Eingriffselement (18) wenigstens ein nahe dem freien Ende (17) des beweglichen Schenkels (11) zur dem anderen Schenkel (10) abgewandten Seite vorstehender Haken und das Gegeneingriffselement wenigstens eine im Grundkörper (1) angeordnete, zur Sichtseite hinterschnittene Schulter (20) ist.

6. Lagerböckchen nach Anspruch 5, **dadurch gekennzeichnet, daß** die Schulter (20) und/oder der Haken mit einer in Eingriffsrichtung (E) wirkenden Anzugsschräge (22) ausgebildet ist bzw. sind.

7. Lagerböckchen nach wenigstens einem der vorhergehenden Ansprüche, **dadurch gekennzeichnet, daß** der bewegliche Schenkel (11) wenigstens eine zur Einsteckrichtung (S) schräge Einsteckrampe (15) aufweist, die, vorzugsweise, an einer Stützschulter (14) endet.

8. Lagerböckchen nach Anspruch 7, **dadurch gekennzeichnet, daß** die Stützschulter (14) in Eingriffsrichtung (E) ansteigend ausgebildet ist.

9. Lagerböckchen nach wenigstens einem der vorhergehenden Ansprüche, **dadurch gekennzeichnet, daß** die Sperrkeile (8) aufweisende Abdeckung (2) ein vom Grundkörper (1) getrenntes, auf die Sonnenblenden-Achse (X) auffädelbares, am Grundkörper (1) verrastbares Bauteil ist.

10. Lagerböckchen nach wenigstens einem der Ansprüche 1 bis 8, **dadurch gekennzeichnet, daß** die Abdeckung (2) aus zwei über Filmscharniere (21) mit dem Grundkörper (1) einstückigen, eine Einstecköffnung (7) für die Sonnenblenden-Achse (X) aussparenden Abdeckklappen (2') besteht, deren jede einen Sperrkeil (8) trägt und am Grundkörper (1) verrastbar ist.

11. Lagerböckchen nach wenigstens einem der vorhergehenden Ansprüche, **dadurch gekennzeichnet, daß** der Grundkörper (1) benachbart zu den Verriegelungselementen (V) Anlageflächen (12) aufweist, sowie von den Anlageflächen (12) beabstandete, in Umfangsrichtung verteilte Flansche (5) zum Festlegen eines weiteren Ausstattungsteils (H), wie eines Dachhimmels oder einer Verkleidung, an der Tragstruktur (T).

12. Lagerböckchen nach wenigstens einem der vorhergehenden Ansprüche, **dadurch gekennzeichnet, daß** die Abdeckung (2) die Flansche (5) des Grundkörpers (1) ergänzende Bereiche (6) zum Festlegen des Ausstattungsteils (H) aufweist.

13. Lagerböckchen nach wenigstens einem der vorhergehenden An-sprüche, **dadurch gekennzeichnet, daß** das Lagerböckchen (8) mit oder ohne Abdeckung (2) ein einstückiger Kunststoff-Spritzguß-Formteil ist.

14. Lagerböckchen nach wenigstens einem der vorhergehenden Ansprüche, **dadurch gekennzeichnet, daß** die Abdeckung (2) ein einstückiger Kunststoff-Spritzguß-Formteil ist.

15. Lagerböckchen nach wenigstens einem der vorhergehenden Ansprüche, **dadurch gekennzeichnet, daß** im Lagerdom (3) die Sonnenblenden-Achse (X) festgelegt ist.

## Claims

1. Small bearing bracket (B) for a vehicle sun visor, in particular for the screwless installation of the sun-visor spindle (X) on a vehicle supporting structure (T), having a basic body (1), which bears at least two locking elements (V) and at least one bearing dome (3) and which can be fitted by means of the locking elements (V) which can be inserted into cut-outs in a vehicle supporting structure (T) and engage behind cut-out edges, and having a covering (2, 2') on the visible side on which blocking wedges (8) for the locking elements are arranged, the said wedges securing the locking elements (V) and being movable relative to the locking elements, each locking element (V) having two limbs (10, 11) and, by means of them, being able to be brought into engagement transversely with respect to the insertion direction on opposite cut-out edges, and one limb (11) being separated from the basic body (1) and arranged in a manner such that it can move in the engagement direction (E) relative to the said basic body (1), **characterized in that** the small bearing bracket (B) has a form-fitting coupling (K) between the movable limb (11) and the basic body (1), which coupling can be engaged in the engagement direction (E) and secures the basic body (1) against a movement opposed to the insertion direction.

2. Small bearing bracket according to Claim 1, **characterized in that** the blocking wedge (8) can be driven between the two limbs (10, 11), and **in that** the coupling (K) between the movable limb (11) and the basic body (1) can be indirectly actuated by the blocking wedge (8) to effect engagement.

3. Small bearing bracket according to Claim 1, **characterized in that** the movable limb (11) is connected resiliently to the other limb (10), and **in that** the coupling (K) between the movable limb (11) and the basic body (1) can be actuated by the restoring-spring force of the movable limb (11) to effect release.

4. Small bearing bracket according to at least one of Claims 1 to 3, **characterized in that** the coupling (K) comprises engagement and mating engagement elements (18, 19), respectively on the limb (11) and on the basic body (1), which elements can move relative to one another in the engagement direction (E) and engage behind one another counter to the adjusting direction (S), and **in that** the engagement and mating engagement elements which engage one behind another can be supported on one another essentially opposite to the insertion direction.

5. Small bearing bracket according to Claim 4, **characterized in that** the engagement element (18) is at least one hook which, close to the free end (17) of the movable limb (11), protrudes towards that side which faces away from the other limb (10), and **in that** the mating engagement element is at least one shoulder which is arranged in the basic body (1) and is undercut towards the visible side.

6. Small bearing bracket according to Claim 5, **characterized in that** the shoulder (20) and/or the hook are or is designed with a tightening slope (22) acting in the engagement direction (E).

7. Small bearing bracket according to at least one of the preceding claims, **characterized in that** the movable limb (11) has at least one insertion ramp (15) which slopes towards the insertion direction (S) and, preferably, ends at a supporting shoulder (14).

8. Small bearing bracket according to Claim 7, **characterized in that** the supporting shoulder (14) is of rising design in the engagement direction (E).

9. Small bearing bracket according to at least one of the preceding claims, **characterized in that** the covering (2) having blocking wedges (8) is a component which is separate from the basic body (1), can be threaded onto the sun-visor spindle (X) and can be latched to the basic body (1).

10. Small bearing bracket according to at least one of Claims 1 to 8, **characterized in that** the covering (2) comprises two covering flaps (2') which are integral with the basic body (1) via film hinges (21), leave open an insertion opening (7) for the sun-visor spindle and each of which bears a blocking wedge (8) and can be latched to the basic body (1).

11. Small bearing bracket according to at least one of the preceding claims, **characterized in that** the basic body (1) has bearing surfaces (12) adjacent to the locking elements (V) and flanges (5), which are spaced apart from the bearing surfaces (12) and are distributed in the circumferential direction, for securing a further equipment part (H), such as a roof lining or a trim panel, on the supporting structure (T).

12. Small bearing bracket according to at least one of the preceding claims, **characterized in that** the covering (2) has regions (6) which supplement the flanges (5) of the basic body (1) for the purpose of securing the equipment part (H).

13. Small bearing bracket according to at least one of the preceding claims, **characterized in that** the small bearing bracket (8) with or without a covering (2) is an integral injection-moulded shaped plastic part.

14. Small bearing bracket according to at least one of the preceding claims, **characterized in that** the covering (2) is an integral injection-moulded shaped plastic part.

15. Small bearing bracket according to at least one of the preceding claims, **characterized in that** the sun-visor spindle (X) is secured in the bearing dome (3).

## Revendications

1. Support de palier (B) pour un pare-soleil de véhicule, en particulier pour le montage sans vissage de l'axe (X) du pare-soleil sur une structure portante (T) du véhicule, comportant au moins deux éléments de verrouillage (V) et au moins un corps de base (1) qui porte un tourillon de palier (3) et qui peut être monté au moyen des éléments de verrouillage (V) qui peuvent être enfichés dans des découpes d'une structure portante (T) du véhicule et qui accrochent par l'arrière le bord des découpes, et un recouvrement (2, 2') situé du côté visible et sur lequel sont disposés des biseaux de blocage (8) pour les éléments de verrouillage, mobiles par rapport aux éléments de verrouillage et fixant les éléments de verrouillage (V), chaque élément de verrouillage (V) présentant deux branches (10, 11) et pouvant être engagé par ces dernières sur des bords opposés des découpes, transversalement par rapport à la direction d'enfichage, une branche (11) étant séparée du corps de base (1) et pouvant se déplacer par rapport à ce corps de base (1) dans la direction d'engagement (E), **caractérisé en ce que** le support de palier (B) présente entre la branche mobile (11) et le corps de base (1) un accouplement (K) en correspondance géométrique qui peut être reculé dans la direction d'engagement (E) et qui empêche le corps de base (1) de se déplacer dans la direction opposée à la direction d'enfichage.

2. Support de palier selon la revendication 1, **caractérisé en ce que** le biseau de blocage (8) peut être engagé entre les deux branches (10, 11) et **en ce que** le biseau de blocage (8) permet d'actionner indirectement l'accouplement (K) entre la branche mobile (11) et le corps de base (1) dans le sens du recul.

3. Support de palier selon la revendication 1, **caractérisé en ce que** la branche mobile (11) est reliée élastiquement à l'autre branche (10) et **en ce que** la force élastique de recul de la branche mobile (11) permet d'actionner l'accouplement (K) dans le sens de la libération entre la branche mobile (11) et le corps de base (1).

4. Support de palier selon au moins l'une des revendications 1 à 3, **caractérisé en ce que** l'accouplement (K) est constitué d'éléments d'engagement et d'éléments complémentaires d'engagement (18, 19) prévus respectivement sur la branche (11) et sur le corps de base (1), qui s'engagent l'un derrière l'autre dans le sens opposé à la direction de réglage (S) et qui peuvent se déplacer l'un par rapport à l'autre dans la direction d'engagement (E), et **en ce que** les éléments d'engagement et les éléments complémentaires d'engagement qui s'engagent l'un derrière l'autre peuvent s'appuyer l'un sur l'autre essentiellement dans la direction opposée à la direction d'enfichage.

5. Support de palier selon la revendication 4, **caractérisé en ce que** l'élément d'engagement (18) est au moins un crochet qui, à proximité de l'extrémité libre (17) de la branche mobile (11), déborde par rapport au côté non tourné vers l'autre branche (10), l'élément complémentaire d'engagement étant au moins un épaulement (20) disposé dans le corps de base (1) et avec contre-dépouille du côté visible.

6. Support de palier selon la revendication 5, **caractérisé en ce que** l'épaulement (20) et/ou le crochet sont configurés avec une pente conique (22) qui agit dans la direction d'engagement (E).

7. Support de palier selon au moins l'une des revendications précédentes, **caractérisé en ce que** la branche mobile (11) présente au moins une pente d'enfichage (15) qui est oblique par rapport à la direction d'enfichage (S) et qui se termine de préférence sur un épaulement d'appui (14).

8. Support de palier selon la revendication 7, **caractérisé en ce que** l'épaulement d'appui (14) est configuré de manière à monter dans la direction d'enfichage (E).

9. Support de palier selon au moins l'une des revendications précédentes, **caractérisé en ce que** le recouvrement (2) qui présente les biseaux de blocage (8) est un composant séparé du corps de base (1) qui peut être enfilé sur l'axe (X) du pare-soleil et qui peut être encliqueté sur le corps de base (1).

10. Support de palier selon au moins l'une des revendications 1 à 8, **caractérisé en ce que** le recouvrement (2) est constitué de deux clapets de recouvrement (2') réalisés d'un seul tenant avec le corps de base (1) par l'intermédiaire de charnières en film (21), qui découpent une ouverture d'enfichage (7) pour l'axe (X) du pare-soleil, qui portent chacun un biseau de blocage (8) et peuvent être encliquetés sur le corps de base (1).

11. Support de palier selon au moins l'une des revendications précédentes, **caractérisé en ce que** le corps de base (1) présente des surfaces de pose (12) voisines des éléments de verrouillage (V) ainsi qu'une bride (5) située à distance des surfaces de pose (12) et répartie à la périphérie, pour la fixation d'une autre pièce d'équipement (H), par exemple un habillage ou habillage de plafond, sur la structure portante (T).

12. Support de palier selon au moins l'une des revendications précédentes, **caractérisé en ce que** le recouvrement (2) présente des régions (6) qui complètent la bride (5) du corps de base (1) pour la fixation de la pièce d'équipement (H).

13. Support de palier selon au moins l'une des revendications précédentes, **caractérisé en ce que** le support de palier (8) est une pièce en matière synthétique moulée par injection, façonnée d'un seul tenant avec ou sans le recouvrement (2).

14. Support de palier selon au moins l'une des revendications précédentes, **caractérisé en ce que** le recouvrement (2) est une pièce en matière synthétique moulée par injection, façonnée d'un seul tenant.

15. Support de palier selon au moins l'une des revendications précédentes, **caractérisé en ce que** l'axe (X) du pare-soleil est fixé dans le tourillon de palier (3).
